Europäisches Patentamt

European Patent Office

Office européen des brevets

(11) Publication number: **0 520 613 A1**

# EUROPEAN PATENT APPLICATION

(21) Application number: **92304311.1**

(22) Date of filing: **13.05.92**

(51) Int. Cl.5: **A63C 11/10, A63C 11/02**

(30) Priority: **24.05.91 GB 9111245**

(43) Date of publication of application:
**30.12.92 Bulletin 92/53**

(84) Designated Contracting States:
**AT CH DE FR GB IT LI SE**

(71) Applicant: **McManus, Peter**
**40 Church Street**
**Willingdon, Eastbourne, East Sussex BN20 9HT(GB)**

(72) Inventor: **McManus, Peter**
**40 Church Street**
**Willingdon, Eastbourne, East Sussex BN20 9HT(GB)**

(74) Representative: **Gura, Henry Alan et al**
**MEWBURN ELLIS 2 Cursitor Street**
**London EC4A 1BO(GB)**

(54) **Ski carrier.**

(57) A ski carrier including a body part capable of being connected to the ends of a pair of skis (S).

So that skis of various widths can be carried safely and securely, adjustable ski end gripping means are connected to the body part, and the body part is also provided with wheels (6,6) or with a roller (60) or with a ground contacting skid.

FIG.6

EP 0 520 613 A1

The invention relates to devices for assisting in the convenient transportation of skis.

Carrying skis manually is an uncomfortable and sometimes dangerous activity due to the unwieldy nature of skis which are often over 2m long. Including the metal bindings and release mechanisms customarily fitted to skis to facilitate attachment to skiing boots, skis are relatively heavy items to carry by hand. The customary method of carrying skis is over the shoulder. This method is uncomfortable and can be dangerous to the person carrying the skis and to others nearby. The danger to all concerned is particularly acute when the person carrying the skis is wearing ski boots and walking on an icy surface due to the danger of slipping.

A ski carrier including a wheeled body part and ski end gripping means is known, but the ski end gripping means has included a buckled strap arrangement which is not convenient to use.

The invention as claimed is intended to provide a remedy. It solves the problem of how to design a ski carrier which will be particularly convenient to use.

The advantages offered by the invention are mainly that the ski end gripping means are very secure and that the skis can be located in the carrier or removed therefrom very quickly and easily. The carrier can grip skis of various widths and the ski end gripping means are such that the skis are protected from damage.

One way of carrying out the invention is described in detail below with reference to drawings which illustrate specific embodiments, in which:-

Figure 1 is a front view of a wheeled ski carrier embodying the invention shown fitted to a ski,

Figure 2 is a view of one of four rubber straps forming part of the carrier,

Figure 3 is a sectional view on the line 3-3 in Figure 1, that is looking on the underside of the carrier,

Figure 4 is a side elevation of the carrier, looking in the direction of arrow 4 in Figure 1, when the wheels have been moved to inoperative positions,

Figure 5 is a view from beneath the carrier when the wheels have been moved to the inoperative positions, and

Figures 6 to 8 are perspective views of a modified form of carrier.

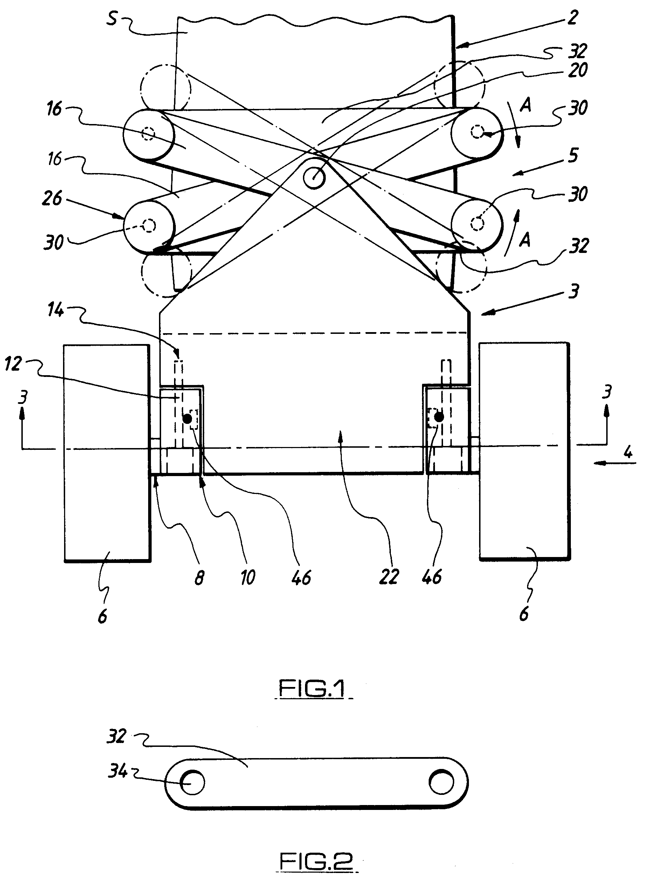

Referring now to Figure 1 of the drawings, the ski carrier there illustrated is shown connected to the ends of a pair of skis S.

The carrier includes a body part, generally indicated 3, and ski end gripping means generally indicated 5. The body part is provided with a pair of wheels 6,6 which are capable of being deployed for use or of being moved to an inoperative position when not required for use.

The body part 3 is provided with upper and lower plate elements 22 and 24 between which the ends of a pair of skis can be slid when the device is to be used. The gripping means generally indicated by the reference 5 include pairs of arms 16 and 18 which are pivotally connected, respectively, midway between their ends, to the upper and lower plate elements 22 and 24 by arm pivots 20. The opposite ends of the pairs of arms are connected by cylindrical gripping members 26, reduced diameter peg portions 30 of which are a push fit in cylindrical apertures in end portions of the arms 16 and 18.

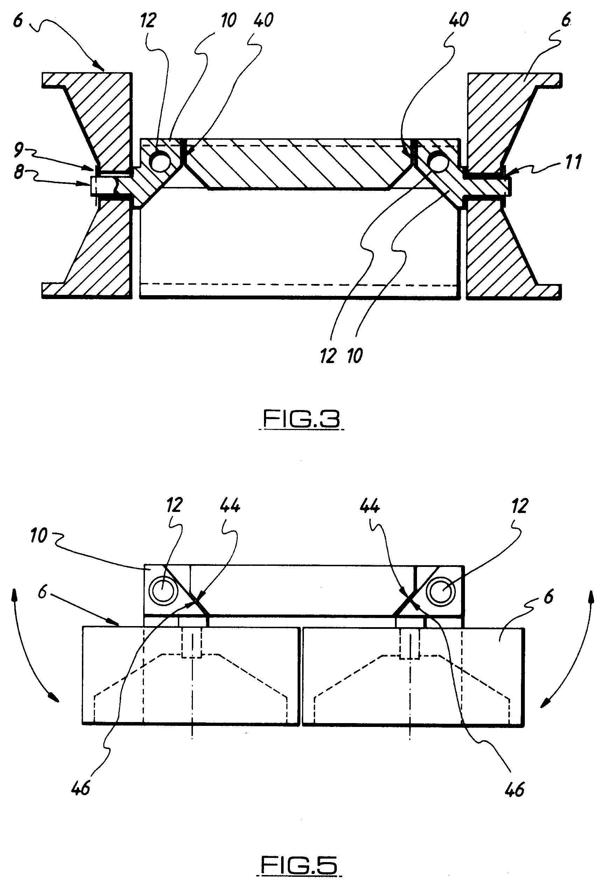

Pairs of resilient rubber straps 32 (see also Figure 2) extend under tension between the pairs of arm ends nearest the wheels 6,6 and between the two arm ends remote from said wheels. The end of each strap 32 is connected to its associated arm end by means of the respective gripping member peg portion 30 which extends through a hole 34 near the end of the strap before entering the cylindrical aperture in the end of the respective arm.

Being freely pivotable about the respective arm pivots 20, the arms of each pair of arms can either extend at relatively shallow angles to each other, as shown in Figure 1, when the ends of a pair of skis are located in the carrier, or can extend at a greater angle to each other when the carrier has been removed from the skis. When the carrier is in an inoperative condition, not fitted to the ends of a pair of skis, the rubber straps 32 will have pulled the oppositely disposed pairs of gripping members together to the positions shown in chain-dotted lines in Figure 1, their further movement being limited by the abutment of an end of each arm 16 and 18 with the body part 3.

The wheels 6,6 are rotatably mounted on respective axles 8 which project from respective pivot blocks 10. The pivot blocks 10 are located on opposite sides of the body part 3 by respective headed pivot pins 12, each of which is secured in a pin recess 14 in the body part. As shown in Figure 3, the wheels 6,6 are located on their axles 8 by circlips 9 which engage grooves 11 in end portions of said axles.

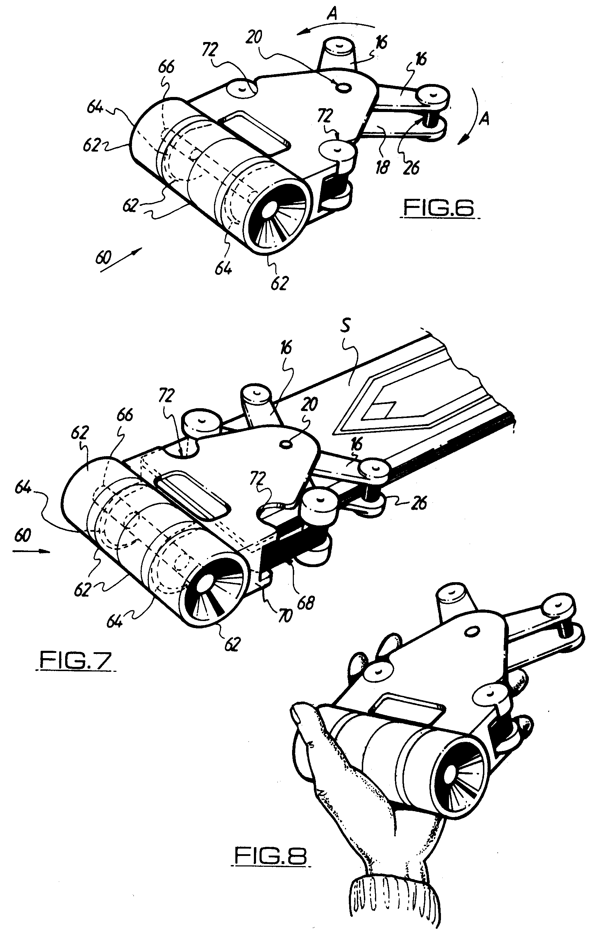

As illustrated in Figures 3 and 5, the pivot blocks 10,10 are capable of being pivoted between alternative positions in which the wheels 6,6 are deployed for use (see Figure 3) or are located in an inoperative position (see Figure 5). In the first position, the wheels are located for rotation about a common axis of rotation and the pivot blocks engage respective abutment surfaces 40. In the second position the pivot blocks engage respective abutment surfaces 44. Detent means 46 (see Figure 1) are provided for retaining the pivot blocks in the selected one of these two positions.

To use the device, and in order to allow a pair of skis to be inserted into it, two gripping members 26 on one side of the device are urged towards each other by finger and thumb, causing the pairs of arms 16 and 18 to scissor together as indicated by the arrows A in Figure 1, thus further extending the straps 32. When the ends of a pair of skis have been inserted between the pairs of gripping members as shown in Figure 1, the gripping members can be released and under the influence of the straps 32 the arms 16,18 pivot oppositely so that the members 26 can securely grip the side edges of the skis. The skis can then be trailed along by the user in a manner which is both comparatively effortless and safe. It has been found that the manner of location of the skis in the device is very secure and that the skis can be located within it or removed therefrom very quickly and easily. When the ends of a pair of skis have been located in the device, the ground contacting surfaces of the skis are engaged by the rubber straps 32 and are therefore protected from damage.

Referring now to Figure 6 of the drawings, in a modification of the carrier just described, the wheels 6,6 have been replaced by a roller 60 extending completely across the width of the body part, the roller being constituted by four wheels 62 located co-axially. Two of the wheels are located back to back between a pair of pivot plates 64,64 extending rearwardly from the body part. The two remaining wheels are located against the remote side surfaces of said pivot plates. A common axle 66 extends through the four wheels and through locating holes in the pivot plates.

In this modified form of carrier, the elastomeric member provided for urging the oppositely disposed gripping members towards each other is in the form of an endless loop 68 which engages the oppositely disposed gripping members nearest the body part; it extends indirectly between said gripping members, extending firstly in the direction in which a pair of skis are entered into the carrier and then passing through slots 70 in the body part to extend transversely of said carrier.

In Figure 6 the carrier is shown in its free condition in which the ends of the pairs of arms 16 and 18 nearest the body part have been pulled by the elastomeric member 68 into pockets 72 in the plate elements of the body part. However, in Figure 7, the elastomeric member has been shown to have been further extended by a force applied to the free ends of the pairs of arms in the direction of the arrows A in Figure 6, this having increased the spacing of the oppositely disposed gripping members so that the ends of a pair of skis S have been able to be inserted into the carrier. To remove the skis from the carrier, force applied to the pairs of arms in the direction of the arrows A in Figure 6 will again increase the spacing of the oppositely disposed gripping members to allow them to be slid along the side edges of the skis.

In this arrangement, the gripping members at the free ends of the pairs of arms provided with rubber sleeve elements to reduce any tendency for said gripping members to slip on the side edges of the skis when the carrier is in use. The other gripping members do not require such sleeve elements because they are flanked by the elastomeric member 68 which will have the same function.

Figure 8 illustrates the fact that the carrier is small enough to be carried in the hand (or in a pocket) when not in use.

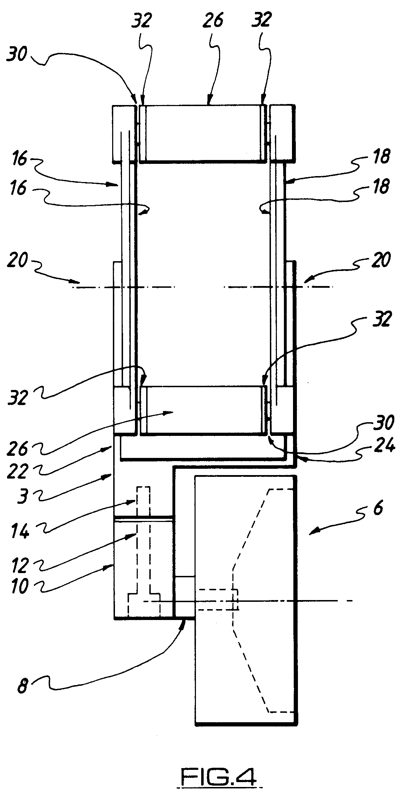

Various other modifications may be made. For example, in the ski carrier illustrated in Figures 1 to 5,to reduce any tendency for the gripping members to slip on the side edges of the skis, all four gripping members may be provided with rubber sleeve elements. The means provided for urging the oppositely disposed gripping members of the first described embodiment towards each other could be modified as illustrated in Figures 6 to 8.

It is not essential for the device to be fitted with a pair of wheels movable between operable and inoperable positions or with a roller rotatable about an axis fixed with respect to the body part. The device could be provided with a skid member instead of a roller or wheels, such a skid member extending across at least a major part of the width of said body. In this case, such a skid mounting body part could be otherwise the same as the body part in either one of the illustrated embodiments.

## Claims

1. A ski carrier including a wheeled or skid mounting body part and ski end gripping means connected to said body part, characterised in that the gripping means include at least a pair of oppositely disposed gripping members urged towards each other and into engagement with opposite side edges of the pair of skis.

2. A ski carrier according to claim 1, in which said gripping members are carried by respective arms pivotally connected to the body part.

3. A ski carrier according to claim 2, in which the arms are pivotally connected, midway between their ends, to the body part, respective gripping members being connected to the opposite ends of each arm.

4. A ski carrier according to claim 3, in which the body part is provided with upper and lower plate elements and respective pairs of arms are pivotally connected, respectively, midway between their ends, to said upper and lower plate elements, the opposite ends of the respective pairs of arms being connected to the opposite ends of the gripping members.

5. A ski carrier according to any one of the preceding claims, in which means provided for urging oppositely disposed gripping members towards each other are constituted by at least one elastomeric member connected between a pair of oppositely disposed gripping members.

6. A ski carrier according to claim 5, in which the elastomeric member is in the form of an endless loop which engages oppositely disposed gripping members and extends indirectly between said gripping members, extending firstly in the direction in which a pair of skis are entered into the carrier and then transversely of said carrier.

7. A ski carrier according to any one of the preceding claims, the carrier being provided with a pair of ground contacting wheels rotatably mounted on respective axles, said axles being movable to displace the wheels between alternative operative and retracted positions.

8. A ski carrier according to claim 7, in which the axles project from respective pivot blocks which are pivotally connected to the body part, detent means being provided for retaining the pivot blocks in the selected one of their two positions of adjustment.

9. A ski carrier according to any one of claims 1 to 5, the carrier being provided with a roller extending across at least a major part of the width of the body part.

10. A ski carrier according to claim 9, in which the roller is constituted by a plurality of wheels located co-axially, at least one of said wheels being located between a pair of pivot plates extending rearwardly from the body part, a common axle extending through the plurality of wheels and through locating holes in said pivot plates.

FIG.1

FIG.2

EP 0 520 613 A1

FIG.3

FIG.5

FIG.4

7

FIG.6

FIG.7

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-U-8 910 565 (OHLROGGE)<br>* page 4, line 3 - page 5, line 15; figures 1-6 *<br>---  | 1-5 | A63C11/10<br>A63C11/02 |
| Y | EP-A-0 191 891 (MEIR)<br>* page 6, line 1 - line 9; figure 9 *<br>--- | 1-5 | |
| A | FR-A-2 595 580 (BOURDOIS)<br>* page 1, line 11 - line 17 *<br>* page 2, line 3 - line 17; figures 1,2 *<br>----- | 1,9,10 | |

TECHNICAL FIELDS
SEARCHED (Int. Cl.5)

A63C

The present search report has been drawn up for all claims

| Place of search | Date of completion of the search | Examiner |
|---|---|---|
| BERLIN | 21 AUGUST 1992 | MONNE E. |